# EUROPEAN PATENT SPECIFICATION

(11) **EP 3 633 952 B1**
(45) Date of publication and mention of the grant of the patent: **22.12.2021**
(21) Application number: 19204398.2
(22) Date of filing: 21.10.2019
(51) Int. Cl.: H04L 29/06

(54) **SYSTEMS AND METHODS FOR RECEIVING AND TRANSMITTING COMMUNICATION SIGNALS**
SYSTEM UND METHODE ZUM EMPFANGEN UND SENDEN VON KOMMUNIKATIONSSIGNALEN
SYSTÈME ET PROCÉDÉ POUR LA RÉCEPTION ET TRANSMISSION DES SIGNAUX DE COMMUNICATION

(43) Date of publication of application: 08.04.2020
(73) Proprietor: Xertified AB, 752 18 Uppsala (SE)
(72) Inventor: ERIKSSON, Martin, 169 73 Solna (SE); ALM, Jens, 135 54 Tyresö (SE)
(74) Representative: AWA Sweden AB

(56) References cited:
- EP-A2- 0 942 568
- US-A1- 2003 196 084
- US-A1- 2015 271 097

## Description

### FIELD OF THE INVENTION

The present invention generally relates to receiving and transmitting communication signals. More specifically, the present invention is related to systems and methods for receiving and transmitting communication signals.

### BACKGROUND OF THE INVENTION

The interest in connected devices and Intemet-of-Things is steadily increasing within virtually every field, such as within the fields of manufacturing, medicine and finance. Although network security for many of these applications should be prioritized, there are currently tens or hundreds of millions of devices that are connected to various unsecure networks. The connected devices may for example range from medical appliances, manufacturing robots, traffic lights to printers and scanners.

Existing security solutions for networks and connected devices are primarily based on a number of principles. One principle for such networks and connected devices may comprise setting the security at a network level, thereby assuming that all users and devices within the network can be trusted. However, if an intruder compromises the network or if a device within the network is directly connected to a public network, all devices on the network may be compromised. Another principle may be clustering of different usages and/or technologies and then focusing on securing clusters. However, the problem(s) may thereby be broken into a larger number of smaller problems, which lowers the security threshold. An additional principle is to tailor the security for a specific hardware. However, such tailored security solutions may not allow for other devices to also be secured. Further, a principle may simply be to use a relatively low level of security, such as Secure Sockets Layer (SSL).

The patent application US 20030196084A1 discloses a system of wireless devices participating in secure communications with secure networks without storing compromising information on the wireless device. The wireless device may be allowed to participate in a so called Public Key Infrastructure (PKI). Further, the application discloses how a user is requested to provide a digital certificate for authentication before access is granted. However, a problem with the system disclosed herein is that it does not completely address the security risk of the connection between a proxy server and resources. For example, the disclosed system is at risk of a man-in-the-middle attack, i.e. eavesdropping, between the proxy server and a resource. An additional problem with the system disclosed herein is that if the proxy server is compromised, then all connected resourced may be compromised.

The patent application US 2015/0271097 A1 discloses a system for allowing resources to efficiently communicate with one another through their respective proxies.

### SUMMARY OF THE INVENTION

It is of interest to provide alternatives to network security solutions of the prior art in order to improve their security and manageability. Additionally, there is a wish to make it easier to protect devices in public and private networks, especially for legacy devices and devices from different manufacturers. More specifically, systems according to the prior art may not be secure enough, they may require vast combinations of different technologies and/or techniques, making the systems complex and/or difficult to manage. Additionally, it might be difficult to securely expand or reduce the solutions provided by the prior art. Further, systems according to the prior art may not be secure enough with regards to persons with malicious intent who already have access to a network.

Hence, it is an object of the present invention to provide alternatives to network security solutions of the prior art in order to improve their security, manageability, controllability, expandability and/or reducibility.

This and other objects are achieved by providing a communication system for controlling a communication system having the features in the independent claim 1. Preferred embodiments are defined in the dependent claims.

Hence, according to a first aspect of the present invention, there is provided a communication system for receiving and transmitting communication signals. The communication system comprises a data network and at least one proxy device. The at least one proxy device is coupled to the data network. Further, the at least one proxy device is configured for digital certificate authentication. The communication system further comprises at least one resource. Each proxy device of the at least one proxy device is coupled to a respective resource of the at least one resource. Further, the at least one resource is communicatively coupled to the data network via the at least one proxy device. Moreover, the at least one proxy device may be configured to control a communication between the data network and the at least one resource based on digital certificate authentication.

According to a second aspect of the present invention, there is provided a communication arrangement. The communication arrangement comprises the communication system according to the first aspect of the present invention. Further the communication arrangement comprises a management system coupled to the at least one proxy device of the communication system. The management system may be configured to communicate digital certificate authentication data between the at least one proxy device and the management system.

According to a third aspect of the present inventive concept, there is provided a method for controlling a communication system. The method comprises a communication system according to at least one of the first aspect and the second aspect of the invention. The method comprises the step of detecting a communication between the at least one proxy device and at least one of the at least one resource and the data network. Further, the method comprises the step of performing a digital certificate authentication. Additionally, the method comprises the step of controlling the detected communication based on the digital certificate authentication.

Thus, the first, second and third aspects of the present invention are based on the common concept or idea of one or more resources being communicatively coupled to a data network via a respective proxy device, and that the respective proxy device may be configured to control a communication between the data network and the at least one resource based on digital certificate authentication. Thereby, each resource is secured by a respective proxy device. Hence, even in the case that a resource is compromised, the data network would still be protected. Further, in the case that the data network is compromised, each resource is still protected by a respective proxy device. The present invention thereby has a higher level of redundancy, which increases the level of security. Thereby, even if a person would compromise a protected private network or proxy server, the communicatively coupled resources would still protected by each respective proxy device.

The communication system may be configured for receiving and transmitting communication signals within the system and between the communication system and other devices and/or networks. The communication system may be configured for securely receiving and transmitting communication signals. The communication system comprises a data network, at least one proxy device coupled to the data network, and at least one resource. By the term "data network", it is here meant at least one of a single secure data network, a single unsecure data network, a cloud data network, and a plurality of auxiliary data networks. By the term "proxy device", it is here meant an intermediary device, configured to control a communication between the data network and the at least one resource. More specifically, the "proxy device" may constitute a device configured for communication gatekeeping.

The at least one proxy device is configured for digital certificate authentication. By the term "digital certificate authentication", it is here meant authentication or validation of secure communication, e.g. based on at least one of an electronic document, a digital certificate, a signature, a public key, and/or a private key. By the term "resource", it is here meant substantially any device which may be communicatively coupled to the data network, e.g. an electronic device. The at least one proxy device is configured to control a communication between the data network and the at least one resource based on digital certificate authentication. By the term "configured to control a communication", it is here meant that the proxy device is configured to allow or disallow the communication.

According to an embodiment of the present invention, the at least one proxy device may be configured to store at least one digital certificate. By the term "digital certificate", it is here meant at least one of an electronic document, an identity certificate, a signature, a public key, and/or a private key. The at least one proxy device may be configured to control a communication between the data network and the at least one resource based at least on the one or more stored digital certificate(s). It should be noted that the stored certificate(s) may be generated by the communication system. The present embodiment is advantageous in that the security of the communication system may be increased even further. Furthermore, the manageability of the communication system may be increased. The at least one proxy device may be configured to store at least one digital certificate, which may be referred to as a first mode. It will be appreciated that a proxy device which is configured to operate in a first mode may be relatively energy efficient, notably in that it may need a lower amount of calculation power than a proxy device configured to generate at least one digital certificate. Therefore, the proxy device configured to operate in a first mode may consume less power, and may furthermore be relatively small. Moreover, the proxy device configured to operate in a first mode may be more conveniently arranged in a close proximity to its respective resource.

According to an embodiment of the present invention, the at least one proxy device may be configured to generate at least one of at least one public key and at least one private key. The at least one proxy device may be configured to operate in a second mode, which may be referred to as an active mode. A proxy device configured to operate in a second mode may be configured to generate one or more public key(s) and/or one or more private key(s). The at least one proxy device may be configured to receive a digital certificate based on the public key(s) and/or private key(s). Hence, the present embodiment is advantageous in that the security of the communication system may be increased even further.

According to an embodiment of the present invention, the at least one proxy device may be further configured to control communication between the data network and the at least one resource based on at least one of a certificate hardware, a password, an IP-address, an IP-port, and a MAC-address. Hence, the at least one proxy device may be further configured to control communication between the data network and the resource(s) based on digital certificate authentication and one or more of a certificate hardware, a password, an IP-address, an IP-port, and a MAC-address. It will be appreciated that the level of security of the system may be increased by every additional of these mentioned features or functions which the control of the communication of the system is based upon.

According to an embodiment of the present invention, the at least one proxy device may comprise a first communication port coupled to the at least one resource, and a second communication port coupled to the data network. Hence, the one or more resource(s) may be physically coupled to the data network via the first and second communication ports of the respective one or more proxy device(s). The communication with the resource(s) is therefore only possible through the proxy device, or by a physical coupling directly to the resource via the first and second communication ports. It will be appreciated that a physical coupling or connection directly to the resource(s) requires that there is physical access to one or more resource(s), which may be restricted. Thereby, the security of the communication system may be increased even further by the present embodiment.

According to an embodiment of the present invention, at least one of the at least one proxy device and the at least one resource may comprise an identifier. The identifier may be configured to indicate at least one of an identification and a location of at least one of the at least one proxy device and the at least one resource. By the term "identifier", it is here meant substantially any device, unit, or the like, which is configured to indicate an identification or location of the proxy device(s) and/or the resource(s). It should be noted that the security of a system may be dependent on knowing which user(s) and/or device(s) are in the system, and where these user(s) and/or device(s) are in the system. Hence, a communication system, wherein the at least one resource and/or the at least one proxy device is/are identified and/or localized may further increase the security of communication system.

According to an embodiment of the present invention, the identifier may comprise a receiver. The receiver may be configured for receiving a location of at least one of the at least one proxy device and the at least one resource. Thereby, the proxy device(s) and/or the resource(s) may be localized geographically, which may further increase the controllability and the security of the system.

According to an embodiment of the present invention, the management system may be configured to store at least one of the least one public key and the at least one private key. It will be appreciated that if the management system is configured to store the public key(s) and/or the private key(s), then the at least one proxy device may not need to be configured to store these public key(s) and/or private key(s). The present embodiment is advantageous in that the proxy device may be less complex in its configuration. For example, the proxy device according to the present embodiment may comprise less (complex) hardware/circuitry than a proxy device that is configured to store the public key(s) and/or the private key(s). Hence, the energy consumption of the proxy device may be reduced. Further, the size of the proxy device may be reduced. Additionally, the amount of material (elements) needed to produce such a proxy device may be reduced, thereby improving the cost-efficiency of the system.

According to another embodiment of the present invention, the management system may be configured to generate at least one public key and at least one private key. The management may be further configured to generate at least one digital certificate based on at least one of the at least one public key and the at least one private key. Hence, the management system may be configured to generate the public key(s) and/or the private key(s) and provide this key or these keys to the proxy device(s). Accordingly, the proxy device may not need to be configured to generate this key or these keys itself.

The present embodiment is advantageous in that the efficiency of the system may be improved even further.

According to an embodiment of the present invention, the management system may be configured to perform at least one of an identification and a localization of at least one of the at least one proxy device and the at least one resource based on the identifier. In other words, the present communication arrangement may comprise a communication system, wherein the resource(s) and/or the proxy device(s) is/are identified and/or localized based on the identifier. The present embodiment is advantageous in that the identification and/or localization of the resource(s) and/or proxy device(s) may even further increase the security of the communication arrangement.

According to an embodiment of the present invention, the management system may further be configured to perform at least one of an analysis of at least one of the identification and the localization of at least one of the at least one proxy device and the at least one resource, a tracking of at least one of the identification and the localization of at least one of the at least one proxy device and the at least one resource, and a control of at least one of the identification and the localization of at least one of the at least one proxy device and the at least one resource. It will be appreciated that the analysis, tracking and/or control of the identification and/or the localization of the proxy device(s) and/or the resource(s) of the present embodiment may increase the transparency of the communication system. Hence, by this embodiment the security and/or the controllability of the communication arrangement may be increased even further.

According to an embodiment of the present invention, at least one of the management system and the at least one proxy device may be configured to register data communication between the data network and the at least one proxy device. Hence, the management system and/or the proxy device(s) may be configured to register data communication between the data network and the proxy device(s), i.e. from the proxy device to the data network, and from the data network to the proxy device, respectively. By the term "configured to register", it is meant that the management system and/or the proxy device(s) may record, catalogue and/or note data communication between the data network and the proxy device(s). The registered data communication by the communication arrangement may be used to improve the controllability of the communication, and thereby increasing the security of the communication arrangement.

The registered data communication may comprise at least one of a timestamp, data from the at least one resource to the network, data from the data network to the at least one resource, a sender of data communication, a receiver of data communication, an amount of the data communication, a type of the data communication, a number of data communication time outs, number of data communication attempts, and certificate data. In other words, the registered data may comprise any of, or a combination of, the mentioned data forms as exemplified. Hence, by the present embodiment, the controllability of the communication, and thereby the security of the communication arrangement, may be increased even further.

According to an embodiment of the present invention, at least one of the management system and the at least one proxy device may be further configured to control the communication between the data network and the at least one proxy device based on the registered data communication. Hence, according to the present embodiment, the management system and the proxy device(s) may be configured to control the communication based on the registered data communication according to one or more of the previously described embodiments. The present embodiment is advantageous in that the level of security in the communication arrangement is increased.

According to an embodiment of the present invention, at least one of the management system and the at least one proxy device may be configured to register digital certificate data between the data network and the at least one proxy device. The registered digital certificate data may comprise at least one of a timestamp, digital certificate transmitted from the at least one proxy device to the data network, digital certificate transmitted from the data network to the at least one proxy device, digital certificate received by the at least one proxy device, digital certificate received by the data network, a number of digital certificate requests. Hence, by the present embodiment, the security of the communication system may be improved.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Figs. 1 to 4 schematically show communication systems according to exemplifying embodiments of the present invention, and
Figs. 5 and 6 schematically show communication arrangements according to exemplifying embodiments of the present invention.

### DETAILED DESCRIPTION

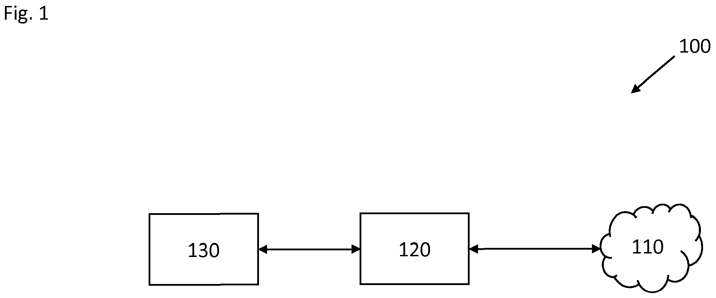

Fig. 1 schematically shows a communication system 100 for receiving and transmitting communication signals according to an exemplifying embodiment of the present invention. The shown communication system 100 comprises a data network 110. Further, the communication system 100 comprises a proxy device 120 coupled to the data network 110. The communication system 100 is shown to comprise a resource 130. The proxy device 120 is coupled to the respective resource 130, i.e. each proxy device 120 of the communication system 100 is coupled to a respective resource 130. The resource 130 is communicatively coupled to the data network 110 via the proxy device 120. The proxy device 120 is configured for digital certificate authentication. The shown proxy device 120 is further configured to control a communication between the data network 110 and the resource 130 based on digital certificate authentication.

It should be noted that the communication system 100 as exemplified is not limited by the illustration in Fig. 1. For example, there may be substantially any number of resources 130 which may be communicatively coupled to a respective number of proxy devices 120. The proxy device 120 may be communicatively coupled to the data network 110 via wire or wirelessly. Additionally, the proxy device 120 may be communicatively coupled to the data network 110 via a switch and a router (not shown). Further, the term "data network" should be interpreted as at least one of a single secure data network, a single unsecure data network, a cloud data network, and a plurality of auxiliary data networks.

According to an example, the proxy device 120 in Fig. 1 may be configured to store at least one digital certificate 410 (not shown), wherein the at least one digital certificate may be used for digital certificate authentication. Furthermore, the proxy device 120 may be configured to generate at least one of at least one public key and at least one private key, wherein the public key(s) and/or the private key(s) may be used for digital certificate authentication. Further, the proxy device 120 may further be configured to control the communication between the data network 110 and the resource(s) 130 based on one or more of a certificate device, a password, an IP-address, an IP-port, and a MAC-address.

Although not explicitly shown in Fig.1, it will be appreciated that the data network 110 may comprise a plurality of auxiliary data networks, wherein this plurality of auxiliary data networks may be communicatively interconnected. For example, the resource 130 may be communicatively coupled to a first auxiliary data network via the proxy device 120, and the proxy device 120 may be configured to control a communication between the first auxiliary data network and the resource 130 based on digital certificate authentication, e.g. received from a second auxiliary data network.

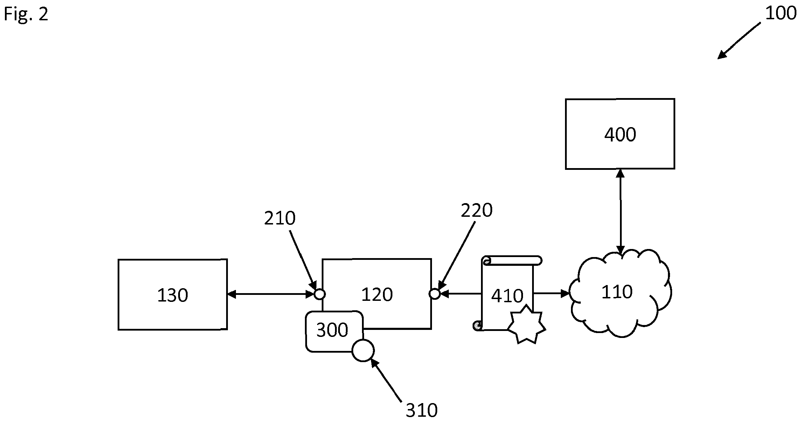

Fig. 2 schematically shows a communication system 100 for receiving and transmitting communication signals according to an exemplifying embodiment of the present invention. It should be noted that Fig. 2 comprises features, elements and/or functions as shown in Fig. 1 and described in the associated text. Hence, it is also referred to that figure and text for an increased understanding.

In Fig. 2, the data network 110 of the shown communication system 100 is communicatively coupled to a digital certification server 400. Albeit drawn separately for reasons of clarity, it is to be understood that the data network 110 may comprise the digital certification server 400. The digital certification server 400 may be configured to generate a digital certificate based on a public key and/or a private key. The digital certification server 400 may comprise a Public Key Infrastructure (PKI) device. Further, the PKI device may comprise a Network Authentication Server (NAS) or a Network Server (NS). The communication system 100 may be configured for digital certificate authentication based on a communication with the digital certification server 400. The proxy device 120 of the communication system 100 may be communicatively coupled to the digital certification server 400. The communicative coupling between the proxy device 120 and the digital certification server 400 may be provided via the data network 110. The proxy device 120 may be configured for digital certificate authentication based on a communication with the digital certification server 400. The proxy device 120 may be configured for Network Address Translation (NAT).

Illustrated in Fig. 2 is a transmission of a digital certificate 410 between the proxy device 120 and the data network 110. The proxy device 120 may be configured to transmit a digital certificate 410 if the respective resource 130 attempts to communicate via the proxy device 120. The digital certificate 410 may be transmitted via the data network 110 to the digital certification server 400. The digital certification server 400 may be configured to authenticate the digital certificate 410. The term "authenticate" should be understood to at least comprise validate, approve, certify, confirm and/or verify. The proxy device 120 may be configured to control a communication between the data network 110 and the resource 130 based on a digital certificate authentication by a digital certification server 400. The proxy device 120 may be further configured to either grant or deny communication between the resource 130 and the data network 110 based on the digital certificate authentication. It should be noted that the proxy device 120 may further be configured to control the communication based on one or more of IP-ports, IP-filters, and/or port-filters.

According to an example, the communication system 100 may be configured to revoke, quarantine and/or disconnect the resource(s) 130 based on a predetermined data network incident. By the term "data network incident", it is meant substantially any kind of incident, event, change, or the like in the communication system 100 such as a disconnection and/or a change in a transmission between the data network 110, the proxy device(s) 120, resource(s) 130 and/or the digital certification server 400.

The proxy device 120 shown in Fig. 2 further comprises a first communication port 210 which is communicatively coupled to the resource 130. Further, the shown proxy device 120 comprises a second communication port 220 which is communicatively coupled to the data network 110. The proxy device 120 may be configured to control a communication via the first communication port 210 and the second communication port 220. Here, the resource 130 may only be communicatively coupled to the proxy device 120 via the first communication port 210. Hence, the only channel for communication with the resource 130 may be through the respective proxy device 120. It will be appreciated that the first and/or the second communication ports 210, 220 are not limited to any specific kind of port and/or interface. The first and/or second communication ports 210, 220 may comprise at least one of RJ45, Wireless, Fiber, USB, and RS232. The proxy device 120 may comprise one (i.e. a single) communication channel. The communication channel may comprise the first communication port 210 coupled to the resource 130, and the second communication port 220 coupled to the data network 110. Thereby, there may only be one way of communication in the communication system 100, namely through the proxy device 120.

According to the communication system 100, as exemplified in Fig. 2, the proxy device 120 is shown to comprise an identifier 300. The identifier 300 may be configured to indicate an identification and/or a location of the proxy device 120. It should be noted that the resource 130 may comprise an identifier 300. Further, the shown identifier 300 comprises a receiver 310. The receiver 310 may be configured for receiving a location of the proxy device 120. Further, the receiver 310 may be configured to transmit the location to the proxy device 120. In turn, the proxy device 120 may be configured to transmit the location to the data network 110. The receiver 310 may be configured to store the location. Furthermore, the receiver 310 may be configured to receive a GPS-location.

The identifier 300 may comprise a readable code (not shown). The readable code may, for example, be configured as a barcode, a QR-code, or the like. The identifier 300 may be configured to be readable and/or scannable. Further, the identifier 300 may be configured to be read and/or scanned by a handheld device. The indication of the identification may comprise one or more of an identification number, a serial number, and a device name. The identifier 300 may be in (direct physical) contact with the proxy device 120.

Additionally, it will be appreciated that the indication of identification as exemplified may comprise a digital indication of identification, which may be referred to as a digital ID. The digital ID may comprise at least one of an IP-address, an IP-port, a location within a data network, identification data of connected devices and a MAC-address. Further, the proxy device 120 and the resource 130, and their couplings and/or connections within and/or to the data network 110, may be indicated in detail. Hence, changes of one or more devices, connections, etc., of the communication system 100, can be tracked and monitored.

The indication of a location of the proxy device 120 and/or the resource 130 may comprise indicating a geographical location of the proxy device 120 and/or the resource 130. Alternatively, the indication of a location of the least one proxy device 120 and/or the resource 130 may comprise indicating a network location of the proxy device 120 and/or the resource 130. The communication system 100 may be configured to receive the indication of the (geographical and/or network) location of the proxy device 120 and/or the resource 130.

Further, the communication system 100 may comprise blueprints. The term "blueprints" should be understood to comprise e.g. data and/or files such as drawings, designs and/or Computer-Aided Design (CAD) files. The blueprints may comprise information about the geographical place(s) where the resource 130 and/or the proxy device 120 are located. Further, the blueprints may comprise information and/or indication(s) of where the one resource 130 and/or the proxy device 120 is located in said geographical place(s).

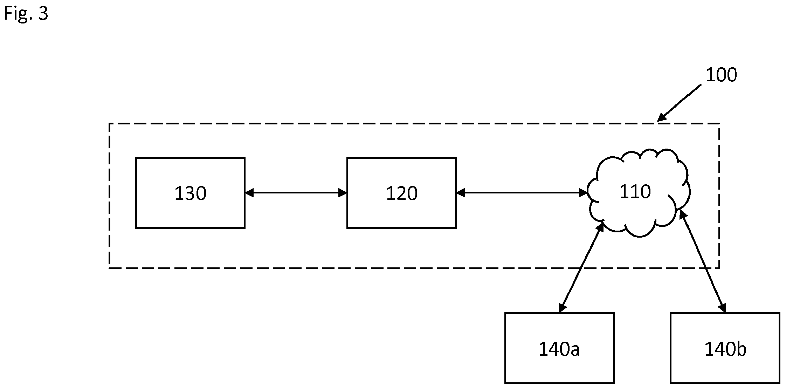

Fig. 3 shows a communication system 100 for receiving and transmitting communication signals according to an exemplifying embodiment of the present invention. It should be noted that Fig. 3 comprises features, elements and/or functions as shown and described in relation to Figs. 1 and 2. Hence, it is also referred to those figures and associated texts for an increased understanding.

The illustrated communication system 100 in Fig. 3 is exemplary for reasons of understanding. For example, there may be substantially any number of resources 130. Accordingly, the communication system 100 may comprise any number of proxy devices 120 coupled to the data network 110, wherein each proxy device 120 is coupled to a respective resource 130. The data network 110 of the communication system 100 is communicatively coupled to two user devices 140a, 140b. By the term "user device", it is here meant substantially any (electronic) device configured to connect to the resource 130 via the data network 110, e.g. a computer. It will be appreciated that there may be substantially any number of user devices 140a, 140b coupled to the data network 110 of the communication system 100, and that the two user devices 140a, 140b are shown as an example. According to the example of Fig. 3, the communication between the user devices 140a, 140b coupled to the data network 110 and the resource 130 coupled to the data network 110 via the respective proxy device 120 may be controlled by the proxy device 120 based on digital certificate authentication. The user device(s) 140a, 140b may only communicate with the resource 130 via the proxy device 120, wherein the proxy device 120 is configured to control the communication between the user device(s) 140a, 140b and the resource 130 based on digital certificate authentication. Thereby, only an authenticated user device 140a, 140b may communicate with the resource 130. Hence, a person with malicious intent using the user device 140a, 140b may not able to connect to the resource 130, even though the person with malicious intent may be connected to the data network 110 by the user device 140a, 140b.

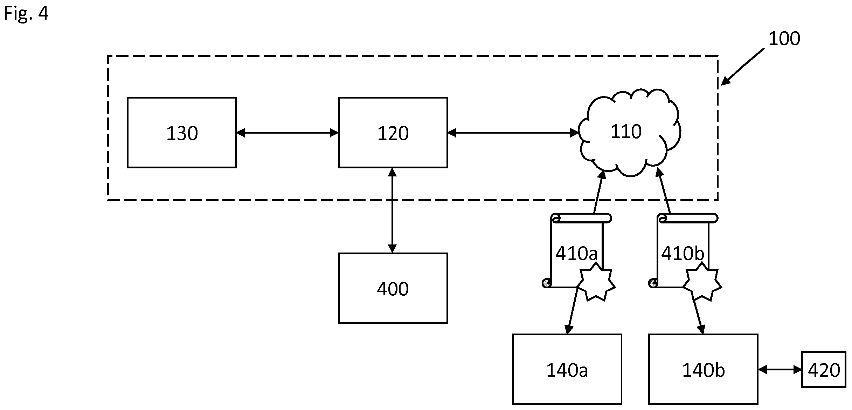

Fig. 4 shows a communication system 100 for receiving and transmitting communication signals according to an exemplifying embodiment of the present invention. It should be noted that Fig. 4 comprises features, elements and/or functions as shown and described in relation to Figs. 1, 2 and/or 3. Hence, it is also referred to one or more of those figures and associated texts for an increased understanding.

The communication system 100 in Fig. 4 shows two digital certificates 410a, 410b. The digital certificates 410a, 410b may be transmitted between a user device 140a, 140b and the data network 110. The digital certificates 410a, 410b may be transmitted from a user device 140a, 140b to the proxy device 120, via the data network 110. The proxy device 120, via which a resource 130 is communicatively coupled to the data network 110, may be configured to control the communication between a resource 130 and a user device 140a, 140b, based on digital certificate authentication, wherein the digital certificate authentication may be based on one or more of the digital certificates 410a, 410b. Furthermore, the digital certificate(s) 410a, 410b may further comprise a password, an IP-address, an IP-port, and/or a MAC-address.

Further, according to an example, the user device 140b is shown be coupled to a certificate device 420. Further, the certificate device 420 may be communicatively coupled to the resource 130. The certificate device 420 may be configured for providing the user device 140b with certificate data, wherein certificate data may comprise at least one of a digital certificate 410, a password, a public key, a private key, and a token. Additionally, the proxy device 120 may be configured to control the communication between the resource 130 and the user device 140b based on digital certificate authentication, wherein the digital certificate authentication may at least be based on the certificate data. The certificate device 420 may be configured to receive a smart card, wherein the smart card may be configured to provide the certificate device with certificate data. By the term "smart card", it is meant a physical electronic device configured for digital certificate authentication.

The shown proxy device 120 in Fig. 4 is communicatively coupled to a digital certification server 400. The digital certification server 400 may comprise a Public Key Infrastructure (PKI) device. Further, the PKI device may comprise a Certificate Authentication Server (CAS) or a Certificate Server (CS). It should be noted that the inventive concept is not limited to the embodiment shown in Fig. 4. For example, the proxy device(s) 120 may be communicatively coupled to the digital certification server 400 via the data network 110. The proxy device(s) 120 may be configured to transmit a digital certificate 410 to a digital certification server 400. The digital certification server 400 may authenticate the digital certificate 410. Alternatively, the proxy device 120 may comprise a list of digital certificates. A proxy device 120 may be configured to authenticate a digital certificate 410 based on the certificate list. It will be appreciated that the user device(s) 140a, 140b may only communicate with the resource 130 via the proxy device 120 based on the digital certificate(s) 410a, 410b. Hence, a person with malicious intent using the user device(s) 140a, 140 b is not able to connect to the resource 130 without providing the digital certificate(s) 410a, 410b to the proxy device 120.

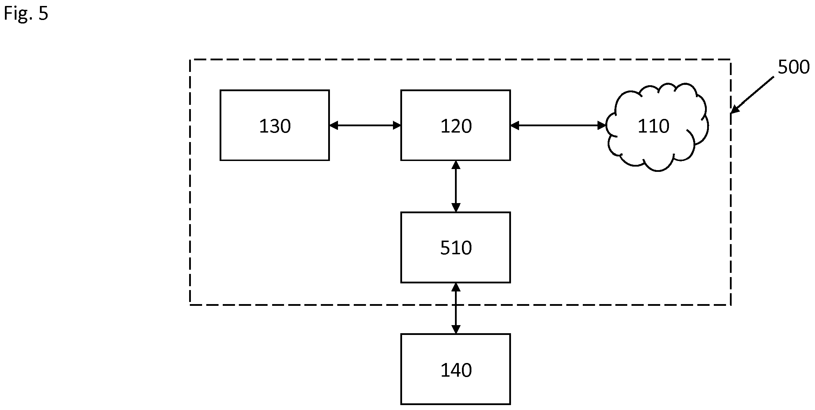

Fig. 5 shows a communication arrangement 500 according to an exemplifying example. The shown communication arrangement 500 comprises a communication system 100 according to an exemplifying embodiment of the present invention. It should be noted that Fig. 5 comprises features, elements and/or functions as shown and described in relation to Figs. 1 to 4. Hence, it is also referred to one or more of those figures and/or associated texts for an increased understanding.

The shown communication arrangement 500 in Fig. 5 comprises a management system 510. The management system 510 may be configured to communicate digital certificate authentication data between a proxy device 120 and the management system 510. Further, Fig. 5 shows a user device 140, communicatively coupled to the management system 510 of the management arrangement 510. The resource 130 is communicatively coupled to the user device 140 via the proxy device 120 and the management system 510.

The management system 510 may be configured to store a public key and/or a private key. The management system 510 may be configured to communicate a digital certificate to a proxy device 120, and wherein the proxy device 120 may be configured to store the digital certificate.

The management system 510 and/or the proxy device(s) 120 may be configured to register data communication between the data network 110 and the proxy device(s) 120. Registered data communication may comprise one or more of a timestamp, data from the resource(s) 130 to the data network 110, data from the data network 110 to the resource(s) 130, a sender of data communication, a receiver of data communication, an amount of the data communication, a type of the data communication, a number of data communication time outs, number of data communication attempts, and certificate data. The management system 510 and/or the proxy device(s) 120 may be further configured to control the communication between the data network 110 and the proxy device(s) 120. Controlling the communication between the data network 110 and the proxy device(s) 120 may be based on the registered data communication. The registered data communication may comprise a data network incident. The management system 510 and/or the proxy device 120 may be further configured to control the communication between the data network 110 and the proxy device based on a predetermined registered data communication. The management system 510 and/or the proxy device 120 may be further configured to perform a predetermined control of the communication between the data network 110 and the proxy device based on a predetermined registered data communication. A control of the communication by the management system 510 may comprise connecting a proxy device 120, a resource 130, a user device 140 and/or the data network 110, disconnecting a proxy device 120, a resource 130, a user device 140 and/or the data network 110, rerouting a proxy device 120, a resource 130, a user device 140 and/or the data network 110, revoking a digital certificate 410, altering a certificate list, closing a port, and/or changing bandwidth between a proxy device 120, a resource 130, a user device 140 and/or the data network 110 and a proxy device 120 , a resource 130, a user device 140 and/or the data network 110.

The user device 140 may only communicate with the resource 130 via the proxy device 120 and/or the management system 510. The proxy device 120 and/or the management system 510 may be configured to control the communication between the user device 140 and the resource 130 based on digital certificate authentication and/or registered data communication.

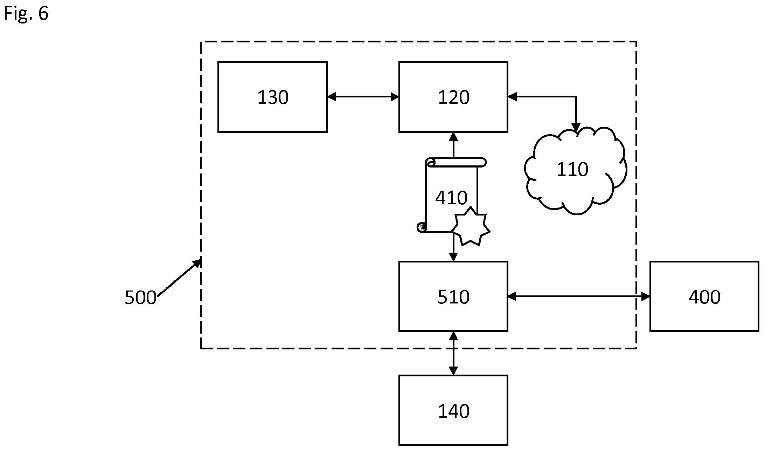

Fig. 6 shows a communication arrangement 500 according to an exemplifying embodiment of the present invention. It should be noted that Fig. 6 comprises features, elements and/or functions as shown and described in relation to Figs. 1 to 5. Hence, it is also referred to one or more of those figures and/or associated texts for an increased understanding.

Additionally, the communication arrangement 500 shown in Fig. 6 comprises a digital certification server 400. The shown digital certification server 400 is communicatively coupled to the management system 510 and to the proxy device 120. Furthermore, the digital certification server 400 may be communicatively coupled to the management system 510 and/or the proxy device(s) 120 via the data network 110.

The communication arrangement 500 may comprise any number of resources 130, wherein each resource 130 is coupled to a data network 110 via a respective proxy device 120. Each proxy device 120 is configured to control a communication between the data network 110 and its respective resource 130 based on digital certificate authentication.

Hence, each proxy device 120 may be configured to control a communication from the data network 110 to its respective resource 130, based on digital certificate authentication. A user device 140 may be coupled to the data network 110 of the communication system 100. Thereby, each proxy device 120 may be configured to control a communication between a user device 140 and the respective resource 130 of the proxy device 120, based on digital certificate authentication. The digital certificate authentication may comprise the proxy device 120 receiving a digital certificate 410 from the management system 510. The proxy device 120 may be configured to compare the received digital certificate 410 to a certificate list. The proxy device 120 and/or the management system 510 may be configured to authenticate the digital certificate 410based on the comparison between the digital certificate 410and the certificate list.

The management system 510 may be configured to generate the digital certificate 410. Additionally, the management system 510 may be configured to generate one or more public key(s) and/or one or more private key(s). Furthermore, the management system 510 may be configured to generate the digital certificate 410, based on the public key(s) and/or the private key(s), wherein this key or these keys may be generated by the management system 510.

Additionally, the management system 510 may be configured to receive the digital certificate 410 from the digital certification server 400 based on a transmission of one or more public key(s) and/or one or more private key(s) from the management system 510 to the digital certification server 400. The digital certificate 410 may be generated during enrollment of a proxy device 120. By the term "enrollment", it is meant bootstrapping and/or installing. A certificate list may be generated during enrollment of a proxy device 120. Enrollment of a proxy device 120 may comprise coupling a respective resource 130 to the data network 110 via the proxy device 120. Enrollment of the proxy device 120 may further comprise generating a digital certificate 410 and/or a certificate list, and/or storing the digital certificate 410 and/or the certificate list in the proxy device 120. Generating a certificate list may comprise receiving a certificate list from the management system 510. The list may comprise the digital certificate(s) 410 related to the resource(s) 130 comprised and/or the user device(s) 140 coupled to the communication system 100. The management system 510 may be configured for revocation of a digital certificate 410. The revocation of the digital certificate(s) 410 may be based on a data network incident. The management system 510 may be configured to alter a certificate list of a proxy device 120, wherein the altering of the certificate list may be based on a data network incident.

The proxy device 120 may be configured to store one or more of the digital certificate(s) 410. The proxy device 120 may be further configured to transmit one or more digital certificate(s) 410 to a digital certification server 400, wherein the digital certification server 400 may be configured to authenticate the digital certificate(s) 410. The proxy device 120 may be configured transmit a digital certificate 410 based on a communication attempt from a resource 130 coupled to the data network 110 via the proxy device 120.

The proxy device(s) 120 and/or the resource(s) 130 may comprise an identifier 300, which may comprise a receiver 310. The management system 510 may be configured to perform an identification and/or a localization of the proxy device(s) 120 and/or the resource(s) 130 based on the identifier 300. The management system 510 may be configured to send a location request to the proxy device 120 and/or the resource(s) 130. Additionally, the proxy device(s) 120 and/or the resource(s) 130 may be configured to transmit a location to the communication system 100 and/or the management system 510. Hence, if the location of the proxy device 120 and/or the resource 130 is changed, geographically or with regards to the data network 110, the communication system 100 and/or the management system 510 may register the change. The management system 510 may be further configured to perform an analysis of the identification and/or the localization of the proxy device(s) 120 and the resource(s) 130, a tracking of the identification and/or the localization of the proxy device(s) 120 and the resource(s) 130, and/or a control of the identification and/or the localization of the proxy device(s) 120 and the resource(s) 130.

Furthermore, the management system 510 may be configured to receive the indication of the location of the proxy device(s) 120 and/or the resource(s) 130. The management system 510 may be configured to track the indication of the location of the proxy device(s) 120 and/or the resource(s) 130. Hence, if the indication of the location of the proxy device(s) 120 and/or the resource(s) 130 changes, then the management system 510 may be configured to track this change. A change of the indication of the location may be comprised by one or more data network incidents. The management system 510 may be configured to control communication based on a change of indication of the location. Further, the management system 510 may be configured to generate identification data based on the identifications of the identifier 300. The management system 510 may be configured to identify a behavior of the proxy device(s) 120 and/or the resource(s) 130 based on the generated identification data. By the term "behavior", it is meant connections, disconnections, user identity, and/or couplings/connections of the data network 110, the proxy device(s) 120, resource(s) 130 and/or user device(s) 140. The management system 510 may be configured to use said data to track and/or map behaviors of the proxy device(s) 120 and/or the resource(s) 130 over time.

The person skilled in the art realizes that the present invention by no means is limited to the preferred embodiments described above. On the contrary, many modifications and variations are possible within the scope of the appended claims. For example, any proxy device(s) 120 and/or resource(s) 130 may comprise an identifier 300. Further, each identifier 300 may comprise a receiver 310. Each proxy device 120 may comprise a first communication port 210 and/or a second communication port 220. Furthermore, the proxy device(s) 120 and/or the management system 510 may be communicatively coupled to the digital certification server 400 via the data network 110. Additionally, the management system 510 may comprise one or more certificate devices 420. In other words, the resource(s) 130, the proxy device(s) 120, and/or the user device(s) 140 may be coupled to a certificate device 420.

## Claims

1. A communication system (100) for receiving and transmitting communication signals, comprising
a data network (110),
at least two proxy devices (120) coupled to the data network,
wherein the at least two proxy devices are configured for digital certificate authentication by transmitting a digital certificate (410) to a digital certification server (400) configured to authenticate the digital certificate, and
at least two resources (130), wherein each proxy device of the at least two proxy devices (120) is coupled to a respective resource of the at least two resources (130), wherein the at least two resources (130) are communicatively coupled to the data network (110) via the at least two proxy devices (120), wherein an only channel for communication with the at least two resources (130) is through the respective proxy device, and wherein the at least two proxy devices (120) are configured to allow or disallow a communication between the data network (110) and the at least two resources (130) based on digital certificate authentication.

2. The communication system according to claim 1, wherein the at least two proxy devices are configured to store at least one digital certificate.

3. The communication system according to claim 1 or 2, wherein the at least two proxy devices are configured to generate at least one of at least one public key and at least one private key.

4. The communication system according to any one of the preceding claims, wherein the at least two proxy devices are further configured to control communication between the data network and the at least two resources based on at least one of a certificate device, a password, an IP-address, an IP-port, and a MAC-address.

5. The communication system according to any one of the preceding claims, wherein the at least two proxy devices comprise a first communication port (210) coupled to the at least two resources, and a second communication port (220) coupled to the data network.

6. The communication system according to any one of the preceding claims, wherein at least one of the at least two proxy devices and the at least two resources comprises an identifier (300) configured to indicate at least one of an identification and a location of at least one of the at least two proxy devices and the at least two resources.

7. The communication system according to claim 6, wherein the identifier comprises a receiver (310) for receiving a location of at least one of the at least two proxy devices and the at least two resources.

8. The communication system according to any one of the preceding claims, further comprising a management system (510) coupled to the at least two proxy devices, wherein the management system is configured to communicate digital certificate authentication data between the at least two proxy devices and the management system.

9. The communication system according to claim 3 and 8, wherein the management system is configured to store at least one of the least one public key and the at least one private key.

10. The communication system according to claim 8, wherein the management system is configured to generate at least one public key and at least one private key, and further being configured to generate at least one digital certificate based on at least one of the at least one public key and the at least one private key.

11. The communication system according to claim 6 or 7, and 8, wherein the management system is configured to perform at least one of an identification and a localization of at least one of the at least two proxy devices and the at least two resources based on the identifier.

12. The communication system according to claim 11, wherein the management system is further configured to perform at least one of an analysis of at least one of the identification and the localization of at least one of the at least two proxy devices and the at least two resources, a tracking of at least one of the identification and the localization of at least one of the at least two proxy devices and the at least two resources, and a control of at least one of the identification and the localization of at least one of the at least two proxy devices and the at least two resources.

13. The communication system according to any one of claims 8-12,
wherein at least one of the management system and the at least two proxy devices is configured to register data communication between the data network and the at least two proxy devices.

14. The communication system according to claim 13, wherein registered data communication comprises at least one of a timestamp, data from the at least two resources to the data network, data from the data network to the at least two resources, a sender of data communication, a receiver of data communication, an amount of the data communication, a type of the data communication, a number of data communication time outs, number of data communication attempts, and certificate data.

15. The communication system according to claim 13 or 14, wherein at least one of the management system and the at least two proxy devices is further configured to control the communication between the data network and the at least two proxy devices based on the registered data communication.

## Patentansprüche

1. Kommunikationssystem (100) zum Empfangen und Senden von Kommunikationssignalen, welches Folgendes umfasst:
ein Datennetzwerk (110),
mindestens zwei Proxy-Geräte (120), die an das Datennetzwerk gekoppelt sind, wobei die mindestens zwei Proxy-Geräte zur Authentifizierung eines digitalen Zertifikates durch das Senden eines digitalen Zertifikates (410) an einen digitalen Zertifizierungsserver (400), der zum Authentifizieren des digitalen Zertifikates konfiguriert ist, konfiguriert sind, und
mindestens zwei Ressourcen (130), wobei jedes Proxy-Gerät der mindestens zwei Proxy-Geräte (120) an eine entsprechende Ressource der mindestens zwei Ressourcen (130) gekoppelt ist, wobei die mindestens zwei Ressourcen (130) über die mindestens zwei Proxy-Geräte (120) kommunikativ an das Datennetzwerk (110) gekoppelt sind, wobei ein einziger Kanal zur Kommunikation mit den mindestens zwei Ressourcen (130) durch das entsprechende Proxy-Gerät verläuft, und wobei die mindestens zwei Proxy-Geräte (120) zum Gestatten oder Verweigern einer Kommunikation zwischen dem Datennetzwerk (110) und den mindestens zwei Ressourcen (130) basierend auf einer Authentifizierung eines digitalen Zertifikates konfiguriert sind.

2. Kommunikationssystem nach Anspruch 1, wobei die mindestens zwei Proxy-Geräte zum Speichern von mindestens einem digitalen Zertifikat konfiguriert sind.

3. Kommunikationssystem nach Anspruch 1 oder 2, wobei die mindestens zwei Proxy-Geräte zum Erzeugen von mindestens einem aus mindestens einem öffentlichen Schlüssel und mindestens einem privaten Schlüssel konfiguriert sind.

4. Kommunikationssystem nach einem der vorhergehenden Ansprüche, wobei die mindestens zwei Proxy-Geräte ferner zum Steuern von Kommunikation zwischen dem Datennetzwerk und den mindestens zwei Ressourcen basierend auf mindestens einem aus einem Zertifikatgerät, einem Passwort, einer IP-Adresse, einem IP-Anschluss und einer MAC-Adresse konfiguriert sind.

5. Kommunikationssystem nach einem der vorhergehenden Ansprüche, wobei die mindestens zwei Proxy-Geräte einen ersten Kommunikationsanschluss (210) gekoppelt an die mindestens zwei Ressourcen und einen zweiten Kommunikationsanschluss (220) gekoppelt an das Datennetzwerk umfassen.

6. Kommunikationssystem nach einem der vorhergehenden Ansprüche, wobei mindestens eine/s der mindestens zwei Proxy-Geräte und der mindestens zwei Ressourcen einen Identifikator (300) umfasst, der zum Angeben von mindestens einem aus einer Identifikation und einem Standort von mindestens einem/r der mindestens zwei Proxy-Geräte und der mindestens zwei Ressourcen konfiguriert ist.

7. Kommunikationssystem nach Anspruch 6, wobei der Identifikator einen Empfänger (310) zum Empfangen eines Standortes von mindestens einem/r der mindestens zwei Proxy-Geräte und der mindestens zwei Ressourcen umfasst.

8. Kommunikationssystem nach einem der vorhergehenden Ansprüche, welches ferner ein Managementsystem (510) gekoppelt an die mindestens zwei Proxy-Geräte umfasst, wobei das Managementsystem zum Kommunizieren von Authentifizierungsdaten eines digitalen Zertifikates zwischen den mindestens zwei Proxy-Geräten und dem Managementsystem konfiguriert ist.

9. Kommunikationssystem nach Anspruch 3 und 8, wobei das Managementsystem zum Speichern von mindestens einem aus dem mindestens einen öffentlichen Schlüssel und dem mindestens einen privaten Schlüssel konfiguriert ist.

10. Kommunikationssystem nach Anspruch 8, wobei das Managementsystem zum Erzeugen von mindestens einem öffentlichen Schlüssel und mindestens einem privaten Schlüssel konfiguriert ist und ferner zum Erzeugen von mindestens einem digitalen Zertifikat basierend auf mindestens einem aus dem mindestens einen öffentlichen Schlüssel und dem mindestens einen privaten Schlüssel konfiguriert ist.

11. Kommunikationssystem nach Anspruch 6 oder 7 und 8, wobei das Managementsystem zum Durchführen von mindestens einem aus einer Identifikation und einer Lokalisierung von mindestens einem/r der mindestens zwei Proxy-Geräte und der mindestens zwei Ressourcen basierend auf dem Identifikator konfiguriert ist.

12. Kommunikationssystem nach Anspruch 11, wobei das Managementsystem ferner zum Durchführen von mindestens einem aus einer Analyse von mindestens einem aus der Identifikation und der Lokalisierung von mindestens einem/r der mindestens zwei Proxy-Geräte und der mindestens zwei Ressourcen, einer Verfolgung von mindestens einem aus der Identifikation und der Lokalisierung von mindestens einem/r der mindestens zwei Proxy-Geräte und der mindestens zwei Ressourcen und einer Steuerung von mindestens einem aus der Identifikation und der Lokalisierung von mindestens einem/r der mindestens zwei Proxy-Geräte und der mindestens zwei Ressourcen konfiguriert ist.

13. Kommunikationssystem nach einem der Ansprüche 8-12, wobei mindestens eines aus dem Managementsystem und den mindestens zwei Proxy-Geräten zum Registrieren von Datenkommunikation zwischen dem Datennetzwerk und den mindestens zwei Proxy-Geräten konfiguriert ist.

14. Kommunikationssystem nach Anspruch 13, wobei registrierte Datenkommunikation mindestens eines aus einem Zeitstempel, Daten von den mindestens zwei Ressourcen zu dem Datennetzwerk, Daten von dem Datennetzwerk zu den mindestens zwei Ressourcen, einem Sender von Datenkommunikation, einem Empfänger von Datenkommunikation, einer Menge der Datenkommunikation, einem Typ der Datenkommunikation, einer Zahl von Datenkommunikationszeitüberschreitungen, einer Zahl von Datenkommunikationsversuchen und Zertifikatdaten umfasst.

15. Kommunikationssystem nach Anspruch 13 oder 14, wobei mindestens eines aus dem Managementsystem und den mindestens zwei Proxy-Geräten ferner zum Steuern der Kommunikation zwischen dem Datennetzwerk und den mindestens zwei Proxy-Geräten basierend auf der registrierten Datenkommunikation konfiguriert ist.

## Revendications

1. Système de communication (100) pour recevoir et transmettre des signaux de communication, comprenant :
un réseau de données (110),
au moins deux dispositifs mandataires (120) couplés au réseau de données, dans lequel les au moins deux dispositifs mandataires sont configurés pour une authentification de certificat numérique par la transmission d'un certificat numérique (410) à un serveur de certification numérique (400) configuré pour authentifier le certificat numérique, et
au moins deux ressources (130),
dans lequel chaque dispositif mandataire parmi les au moins deux dispositifs mandataires (120) est couplé à une ressource respective parmi les au moins deux ressources (130), dans lequel les au moins deux ressources (130) sont couplées en communication avec le réseau de données (110) via les au moins deux dispositifs mandataires (120), dans lequel un seul canal de communication avec les au moins deux ressources (130) est par l'intermédiaire du dispositif mandataire respectif, et dans lequel les au moins deux dispositifs mandataires (120) sont configurés pour autoriser ou interdire une communication entre le réseau de données (110) et les au moins deux ressources (130) sur la base d'une authentification de certificat numérique.

2. Système de communication selon la revendication 1, dans lequel les au moins deux dispositifs mandataires sont configurés pour stocker au moins un certificat numérique.

3. Système de communication selon la revendication 1 ou 2, dans lequel les au moins deux dispositifs mandataires sont configurés pour générer au moins l'une parmi au moins une clé publique et au moins une clé privée.

4. Système de communication selon l'une quelconque des revendications précédentes, dans lequel les au moins deux dispositifs mandataires sont en outre configurés pour commander une communication entre le réseau de données et les au moins deux ressources sur la base d'au moins l'un parmi un dispositif de certificat, un mot de passe, une adresse IP, un port IP et une adresse MAC.

5. Système de communication selon l'une quelconque des revendications précédentes, dans lequel les au moins deux dispositifs mandataires comprennent un premier port de communication (210) couplé aux au moins deux ressources, et un deuxième port de communication (220) couplé au réseau de données.

6. Système de communication selon l'une quelconque des revendications précédentes, dans lequel au moins l'un parmi les au moins deux dispositifs mandataires et les au moins deux ressources comprend un identifiant (300) configuré pour indiquer au moins l'un parmi une identification et un emplacement d'au moins l'un parmi les au moins deux dispositifs mandataires et les au moins deux ressources.

7. Système de communication selon la revendication 6, dans lequel l'identifiant comprend un récepteur (310) pour recevoir un emplacement d'au moins l'un parmi les au moins deux dispositifs mandataires et les au moins deux ressources.

8. Système de communication selon l'une quelconque des revendications précédentes, comprenant en outre un système de gestion (510) couplé aux au moins deux dispositifs mandataires, dans lequel le système de gestion est configuré pour communiquer des données d'authentification de certificat numérique entre les au moins deux dispositifs mandataires et le système de gestion.

9. Système de communication selon les revendications 3 et 8, dans lequel le système de gestion est configuré pour stocker au moins l'une parmi l'au moins une clé publique et l'au moins une clé privée.

10. Système de communication selon la revendication 8, dans lequel le système de gestion est configuré pour générer au moins une clé publique et au moins une clé privée, et étant en outre configuré pour générer au moins un certificat numérique sur la base d'au moins l'une parmi l'au moins une clé publique et l'au moins une clé privée.

11. Système de communication selon les revendications 6 ou 7, et 8, dans lequel le système de gestion est configuré pour réaliser au moins l'une parmi une identification et une localisation d'au moins l'un parmi les au moins deux dispositifs mandataires et les au moins deux ressources sur la base de l'identifiant.

12. Système de communication selon la revendication 11, dans lequel le système de gestion est en outre configuré pour réaliser au moins l'un parmi une analyse d'au moins l'une parmi l'identification et la localisation d'au moins l'un parmi les au moins deux dispositifs mandataires et les au moins deux ressources, un suivi d'au moins l'une parmi l'identification et la localisation d'au moins l'un parmi les au moins deux dispositifs mandataires et les au moins deux ressources, et une commande d'au moins l'une parmi l'identification et la localisation d'au moins l'un parmi les au moins deux dispositifs mandataires et les au moins deux ressources.

13. Système de communication selon l'une quelconque des revendications 8 à 12, dans lequel au moins l'un parmi le système de gestion et les au moins deux dispositifs mandataires est configuré pour enregistrer une communication de données entre le réseau de données et les au moins deux dispositifs mandataires.

14. Système de communication selon la revendication 13, dans lequel une communication de données enregistrée comprend au moins l'un parmi un horodatage, des données d'au moins deux ressources au réseau de données, des données du réseau de données aux au moins deux ressources, un émetteur de communication de données, un récepteur de communication de données, une quantité de la communication de données, un type de la communication de données, un nombre de temporisations de communication de données, un nombre de tentatives de communication de données, et des données de certificat.

15. Système de communication selon la revendication 13 ou 14, dans lequel au moins l'un parmi le système de gestion et les au moins deux dispositifs mandataires est en outre configuré pour commander la communication entre le réseau de données et les au moins deux dispositifs mandataires sur la base de la communication de données enregistrée.
